# EUROPEAN PATENT APPLICATION

(11) **EP 4 717 467 A1**
(43) Date of publication of application: **01.04.2026**
(21) Application number: 24203695.2
(22) Date of filing: 30.09.2024
(51) Int. Cl.: B60C 1/00, C08L 9/06

(54) **RUBBER COMPOSITION FOR PNEUMATIC TYRE AND PNEUMATIC TYRE PRODUCED THEREFROM**

(71) Applicant: Bridgestone Europe NV/SA, 1930 Zaventem (BE)
(72) Inventor: BARTOLONI, Alessandra, 00128 Rome (IT); SPIEZIA, Antonella, 00128 Rome (IT)
(74) Representative: Marks & Clerk LLP

(57) **Abstract**

A rubber composition for a pneumatic tyre comprising a polymer having a low glass transition temperature and a blend of hydrocarbon resins, and a pneumatic tyre produced therefrom.

## Description

### FIELD OF THE INVENTION

The present invention is directed to a rubber composition for a pneumatic tyre, to the use of the rubber composition in the manufacture of a pneumatic tyre, and to pneumatic tyres comprising or prepared from the rubber composition. The pneumatic tyres are suitable for passenger-type motor vehicles.

### BACKGROUND TO THE INVENTION

When designing pneumatic tyres for motor vehicles, there is a need to ensure that the tyres have properties which are suited to the intended use and that the tyres maintain these properties throughout their lifespan. It will be appreciated that different end-uses may demand different properties. There may therefore exist a need to maximise certain properties, while ensuring that others are not too greatly compromised. In other words, there may be a need to ensure a desirable balance of certain properties. In all cases, it is desirable to provide a tyre having a long lifespan that maintains its properties over this lifespan.

In recent years, tyre wear has become a particularly important topic in the tyre industry. Tyres naturally wear during use as a result of contact with the road, which causes portions of rubber to break off from the tyre. Wear may cause the performance of a tyre to deteriorate over time. Additionally, the portions of rubber that break off can persist in the environment and may have a negative impact upon it. It is therefore desirable to provide tyres having improved wear properties, including reduced wear, while maintaining a good balance of other tyre performance properties.

The present invention aims to provide a solution to one or more of the problems identified above.

### SUMMARY OF THE INVENTION

The present inventors have found that the wear performance offered by a rubber composition can be improved by providing a resin system comprising first and second hydrocarbon resins in an optimised ratio. Meanwhile, desirable levels of dynamical properties can also be maintained. Accordingly, rubber compositions of the present invention exhibit a highly desirable balance of properties, which makes them highly suited for pneumatic tyres.

Viewed from a first aspect, the present invention provides a rubber composition for a pneumatic tyre, the composition comprising:
a first elastomer, optionally functionalised, having a glass transition temperature (T_{g}) of from -90°C to -30 °C;
a second elastomer having a glass transition temperature (T_{g}) of from -50°C to -10°C, preferably wherein the second elastomer is a copolymer of styrene and butadiene, optionally functionalised; and
a resin system comprising:
   a first hydrocarbon resin; and
a second hydrocarbon resin,
wherein the ratio of the amount of the first hydrocarbon resin to the amount of the second hydrocarbon resin on a parts per hundred rubber (phr) basis is between 10:90 to 90:10.

Viewed from a further aspect, the present invention provides the use of the rubber composition as hereinbefore described in the manufacture of a pneumatic tyre.

Viewed from a further aspect, the present invention provides a pneumatic tyre comprising the rubber composition as hereinbefore described.

Viewed from a further aspect, the present invention provides a pneumatic tyre prepared from the rubber composition as hereinbefore described.

### BRIEF DESCRIPTION OF THE FIGURES

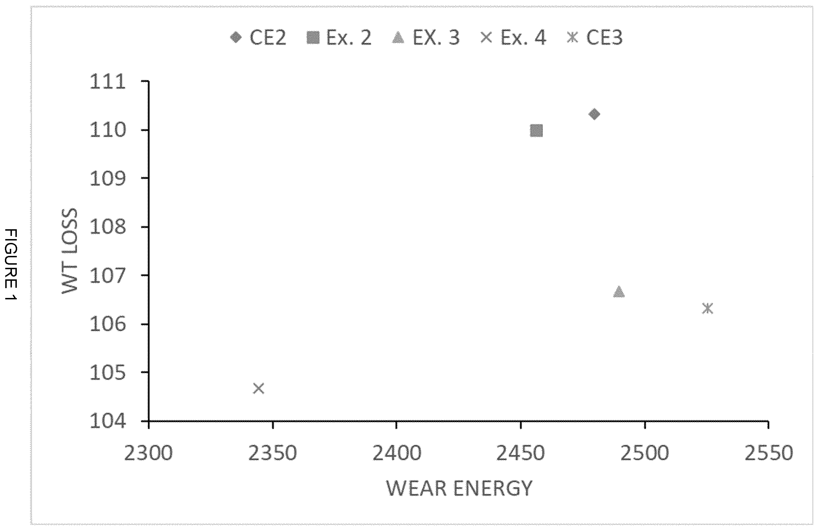

Figure 1 illustrates the wear energy and wt loss performance of certain examples and comparative examples, as detailed hereinafter.

### DETAILED DESCRIPTION OF THE INVENTION

The present invention provides a rubber composition for a pneumatic tyre, the composition comprising:
a first elastomer, optionally functionalised, having a glass transition temperature (T_{g}) of from -90°C to -30 °C;
a second elastomer having a glass transition temperature (T_{g}) of from -50°C to -10°C, preferably wherein the second elastomer is a copolymer of styrene and butadiene, optionally functionalised; and
a resin system comprising:
   a first hydrocarbon resin; and
   a second hydrocarbon resin,
wherein the ratio of the amount of the first hydrocarbon resin to the amount of the second hydrocarbon resin on a parts per hundred rubber (phr) basis is between 10:90 to 90:10.

The present invention is, in part, based on the finding by the inventors that the wear performance offered by a rubber composition can be improved by providing a resin system comprising first and second hydrocarbon resins in an optimised ratio. Meanwhile, desirable levels of dynamical properties can also be maintained. Accordingly, rubber compositions of the present invention exhibit a highly desirable balance of properties, which makes them highly suited for pneumatic tyres.

### Elastomer

The terms "polymer", "copolymer", "elastomer" and rubber may be used interchangeably herein to describe the polymeric base material for the rubber compositions. These elastomers may be, for example, natural rubber, polybutadiene, synthetic polyisoprenes, butadiene copolymers, isoprene copolymers, copolymers of styrene and butadiene, and mixtures thereof. The components of the rubber compositions are provided in parts per hundred rubber (phr), which means parts by weight per hundred parts of elastomer (i.e. the total elastomers, as several elastomers are present). The term "rubber composition" may be used interchangeably with the term "rubber compound".

The rubber composition comprises a first elastomer and a second elastomer. It will be understood that the first elastomer is different to the second elastomer.

It is preferred that at least one, more preferably both, of the first and second elastomers is a diene elastomer, which is optionally functionalised. A diene elastomer is an elastomer derived at least in part (e.g. in a homopolymer or a copolymer) of diene monomers, i.e. monomers carrying two carbon-carbon double bonds, which may or may not be conjugated. Examples of suitable diene elastomers include polybutadienes, natural rubber, synthetic polyisoprenes, butadiene copolymers, copolymers of styrene and butadiene, isoprene copolymers and mixtures thereof. Natural rubber and copolymers of styrene and butadiene are particularly preferred.

It is particularly preferred that:
the first elastomer is a natural rubber or a copolymer of styrene and butadiene or; and/or
the second elastomer is a copolymer of styrene and butadiene,

It is more preferred that
the first elastomer is a natural rubber or a copolymer of styrene and butadiene or; and
the second elastomer is a copolymer of styrene and butadiene.

As noted, it is preferred that at least one, more preferably both, of the first and second elastomers is a copolymer of styrene and butadiene. It is particularly preferred that the second elastomer is a copolymer of styrene and butadiene. Preferred copolymers of styrene and butadiene for use in the present invention are discussed below.

In the present invention, copolymers of styrene and butadiene (abbreviated as SBR) may for example be an emulsion SBR or eSBR (i.e. an SBR prepared by emulsion polymerization), a solution SBR or sSBR (i.e. an SBR prepared by solution polymerization), or a mixture of both. Solution SBR's are preferred.

The SBR is preferably coupled by the use of a coupling reagent. This may advantageously serve as starting point for ramification, in order to obtain branched structures, which may be more processable. The SBR is preferably coupled, with silicon, e.g. tetraethoxysilane as coupling agent.

The SBR may preferably be functionalised. The SBR may preferably comprise one or more functional groups selected from the group consisting of alcohol, epoxide, carboxyl, ester, amide, amine, imine, imide, nitrile, oxime, thiol, sulfide, sulfoxide, sulfone, sulfinic acid, sulfonic acid, sulfonate ester, thiocarboxylic acid, thioester, silane, alkoxysilane, aminosilane and silanol.

The SBR may be functionalised with silicon-containing groups. For example, the SBR may comprise one or more functional groups selected from silane, silyl ether, alkoxysilane, siloxane, aminosilane, iminosilane, and silanol.

The copolymer of styrene and butadiene may preferably be functionalised with carboxyl groups, preferably terminal carboxyl groups. This is particularly preferred for an SBR which is the first elastomer. These carboxyl groups may have a structure according to Formula (I): 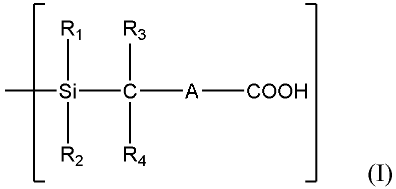 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkylene radical; one or more heteroatoms selected from the group consisting of O, NR₇, S and SiR₈R₉; or, an alkylene radical containing one or more heteroatoms, preferably wherein the heteroatoms are one or more selected from the group consisting of O, NR₇, S, and SiR₈R₉, wherein R₇ is hydrogen or C₁ to C₆ linear alkyl; and R₈ and R₈ are the same or different and each independently a C₁ to C₆ linear alkyl.

In Formula (I), R₁ and R₂ may each independently be a hydrogen, C₁ to C₁₂ linear or branched alkyl, C₂ to C₁₂ linear or branched alkenyl, C₁ to C₁₂ linear or branched alkoxy, C₃ to C₁₂ cycloalkyl, C₂ to C₁₂ cycloalkoxy, C₆ to C₁₂ aryl, C₆ to C₁₂ aryloxy, C₇ to C₁₄ arylalkyl, C₇ to C₁₄ alkylaryl, C₆ to C₂₄ alkylaryloxy, C₅ to C₂₄ aralkyl, or a C₆ to C₂₄ aralkoxy radical. Preferably, R₁ and R₂ may each independently be a C₁ to C₆ linear or branched alkyl, C₂ to C₆ linear or branched alkenyl, C₁ to C₆ linear or branched alkoxy, C₃ to C₁₂ cycloalkyl, C₂ to C₁₂ cycloalkoxy, or a C₆ to C₁₂ aryl radical. Preferably, R₁ and R₂ may each independently be a C₁ to C₆ linear or branched alkyl, C₂ to C₆ linear or branched alkenyl, C₁ to C₆ linear or branched alkoxy, or a C₆ to C₁₂ aryl radical. Preferably, R₁ and R₂ may each independently be a C₁ to C₃ linear or branched alkyl, C₂ to C₃ linear or branched alkenyl, C₁ to C₃ linear or branched alkoxy, or a C₆ aryl radical. For example, R₁ and R₂ may each independently be a methyl, tert-butyl, prop-1-enyl, ethoxy, or phenyl radical. More preferably, R₁ and R₂ are methyl radicals.

R₃ and R₄ may each independently be a hydrogen, C₁ to C₁₂ linear or branched alkyl, C₃ to C₁₂ cycloalkyl, C₆ to C₁₂ aryl, C₅ to C₂₄ aralkyl, or a C₅ to C₂₄ alkaryl radical. Preferably R₃ and R₄ may each independently be a hydrogen, C₁ to C₆ linear or branched alkyl, C₂ to C₆ linear or branched alkenyl, C₁ to C₆ linear or branched alkoxy, or a C₆ to C₁₂ aryl radical. More preferably, R₃ and R₄ may each independently be a hydrogen or methyl radical. In a particular embodiment, R₃/R₄ and "A" together form a C₆ aryl.

"A" may independently be a substituted or unsubstituted C₁ to C₆ linear alkyl radical; one or more heteroatoms selected from the group consisting of O, NR₇, S and SiR₈R₉; or, a substituted or unsubstituted C₁ to C₆ linear alkyl radical containing one or more heteroatoms selected from the group consisting of O, NR₇, S, and SiR₈R₉. Preferably, "A" may independently be a substituted or unsubstituted C₁ to C₃ linear alkyl radical; one or more heteroatoms selected from the group consisting of O, NR₇, S and SiR₈R₉; or, a substituted or unsubstituted C₁ to C₃ linear alkyl radical containing one or more heteroatoms selected from the group consisting of O, NR₇, S, and SiR₈R₉. Where "A" is substituted, it may be substituted with one or more selected from the group consisting of a C₁ to C₆ linear alkyl radical, and a C₆ to C₁₂ aryl radical. Preferably, "A" may be substituted with a C₁ to C₃ linear alkyl radical or a C₆ aryl radical. More preferably, "A" may be substituted with a C₁ radical. R₇ may be hydrogen, C₁ to C₆ linear alkyl, for example methyl, or trimethylsilyl. R₈ and R₈ may independently be C₁ to C₆ linear alkyl, for example methyl. Preferably, A is a C₂ alkyl radical containing an S atom. The structure of "A" as a C₂ alkyl radical containing an S atom is presented below.

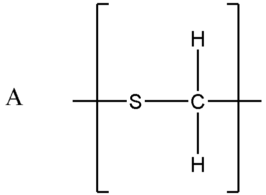

The carboxyl groups may be present as a carboxylate of the Formula (II): 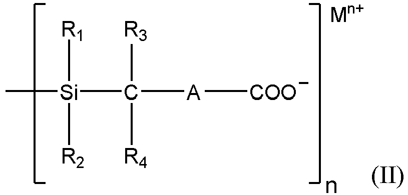 wherein:
R₁ and R₂ are as defined above for Formula (I);
R₃ and R₄ are as defined above for Formula (I);
A is as defined above for Formula (I);
M is a metal or semi-metal of valency 1 to 4, for example, Li, Na, K, Mg, Ca, Zn, Fe, Co, Ni, Al, Nd, Ti, Sn, Si, Zr, V, Mo or W; and
n is an integer from 1 to 4.

In the compounds of Formula (II), M may be Li and n may be 1.

The further definitions of R₁, R₂, R₃, R₄, R₇, R₈ and R₉ in Formula (II) are the same as those above for Formula (I).

The functionalised SBR may preferably be obtainable by reaction of the SSBR copolymer with one or more functionalising reagents in the form of silalactones. The silalactones may be compounds of the Formula (III): 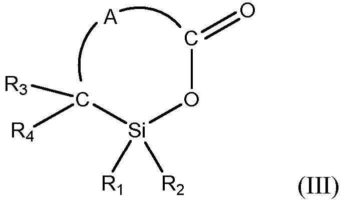 wherein
R₁ and R₂ are as defined above for Formula (I);
R₃ and R₄ are as defined above for Formula (I); and,
A is as defined above for Formula (I).

The further definitions of R₁, R₂, R₃, R₄, R₇, R₈ and R₉ in Formula (III) are as described above for Formula (I).

Advantageously, the silalactones of Formula (III) may be one or more selected from the group consisting of 2,2-dimethyl-1-oxa-2-silacyclohexan-6-one, 2,2,4-trim ethyl- I-oxa-2-s i I acycl oh exa n-6-o ne, 2,2,5-trimethyl-1-oxa-2-silacyclohexan-6-one, 2,2,4,5-tetramethyl-1-oxa-2-silacyclohexan-6-one, 2,2-diethyl-1-oxa-2-silacyclohexan-8-one, 2,2-diethoxy-1-oxa-2-silacyclohexan-6-one, 2,2-dimethyl-1,4-dioxa-2-silacyclohexan-6-one, 2,2,5-trimethyl-1,4-dioxa-2-silacyclohexan-6-one, 2,2,3,3-tetramethyl-1,4-dioxa-2-silacyclohexan-6-one, 2,2-dimethyl-1-oxa-4-thia-2-silacyclohexan-6-one, 2,2-diethyl-1-oxa-4-thia-2-silacyclohexan-6-one, 2,2-diphenyl-1-oxa-4-thia-2-silacyclonexan-6-one, 2-methyl-2-ethenyl-1-oxa-4-thia-2-silacyclohexan-6-one, 2,2,5-trimethyl-1-oxa-4-thia-2-silacyclohexan-6-one, 2,2-dimethyl-1-oxa-4-aza-2-silacyclohexan-6-one, 2,2,4-trimethyl-1-oxa-4-aza-2-silacyclohexan-6-one, 2,4-dimethyl-2-phenyl-1-oxa-4-aza-2-silacyclohexan-6-one, 2,2-dimethyl-4-trimethylsilyl-1-oxa-4-aza-2-silacyclohexan-8-one, 2,2-diethoxy-4-methyl-1-oxa-4-aza-2-silacyclohexan-6-one, 2,2,4,4-tetramethyl-1-oxa-2,4-disilacyclohexan-8-one, 3,4-dihydro-3,3-dimethyl-1H-2,3-benzoxasilin-1-one, 2,2-dimethyl-1-oxa-2-silacyclopentan-5-one, 2,2,3-trimethyl-1-oxa-2-silacyclopenten-5-one, 2,2-dimethyl-4-phenyl-1-oxa-2-silacyclopentan-5-one, 2,2,4-(tert-butyl)-1-oxa-2-silacyclopentan-5-one, 2-methyl-2-(2-propen-1-yl)-1-oxa-2-silacyclopentan-5-one, 1,1-dimethyl-2,1-benzoxasilol-3(1H)-one, 2,2-dimethyl-1-oxa-2-silacycloheptan-7-one. Preferably, the silalactone of Formula (III) is 2,2-dimethyl-1-oxa-4-thia-2-silacyclohexan-6-one. The structure of 2,2-dimethyl-1-oxa-4-thia-2-silacyclohexan-6-one is presented below.

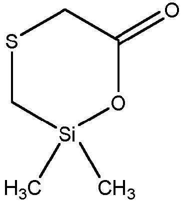

The carboxyl group may preferably be bonded to the SBR copolymer via one or more divalent structural elements of the Formula (V): 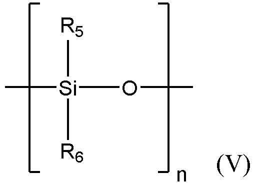 wherein
n is an integer from 3 to 6;
R₅, R₆ are the same or different and are each independently a hydrogen, alkyl, cycloalkyl, aryl, alkaryl, or aralkyl radical;
which may contain one or more heteroatoms, preferably wherein the heteroatoms are one or more selected from the group consisting of O, N, S or Si.

When the divalent structural element is present, the SBR copolymer is bonded at the silicon end of the divalent structural element according to the below:

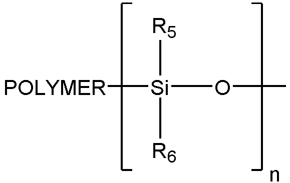

The silane-containing carboxyl group of Formula (I) or (II) is bonded at the oxygen end of the divalent structural element of Formula (V), when the divalent structural element is present.

The divalent structural elements of the Formula (V) may be derived from cyclosiloxanes, such as cyclosiloxanes of the Formula (IV): 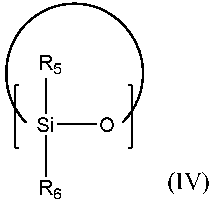 wherein
n is as defined above for Formula (V);
R₅, R₆ are as defined above for Formula (V).
R₅ and R₆ may each independently a hydrogen, C₁ to C₁₂ linear or branched alkyl, C₃ to C₁₂ cycloalkyl, C₆ to C₁₂ aryl, C₇ to C₁₄ aralkyl, or a C₇ to C₁₄ alkaryl radical. Preferably, R₅ and R₆ may each independently be a C₁ to C₆ linear or branched alkyl, preferably, C₁ to C₃ linear alkyl, more preferably a methyl radical.

The divalent structural elements of the Formula (V) may be derived from one or more selected from the group consisting of hexamethylcyclotrisiloxane, octamethylcyclotetrasiloxane, decamethylcyclopentasiloxane and dodecamethylcyclohexasiloxane. Preferably, the divalent structural element is derived from hexamethylcyclotrisiloxane.

It is particularly advantageous for the SBR copolymer to be terminated with carboxyl groups derived from 2,2-dimethyl-1-oxa-4-thia-2-silacyclohexan-6-one that is bonded to the polymer via a divalent structural element derived from hexamethylcyclotrisiloxane. In this embodiment, the carboxyl group of Formula (I) (having R₁, R₂, R₃ and R₄ as methyl radicals and "A" as the C₂ alkyl radical containing an S atom shown above) is bonded to the copolymer by the divalent structural element according to Formula (V), wherein R₅ and R₆ are methyl radicals and n is 3.

The SBR may be functionalised with groups having a structure according to Formula (X): 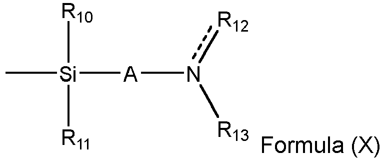 wherein:
A is a C₁-C₁₂ alkylene group or a C₁-C₁₂ alkenylene group;
R₁₀ and R₁₁ are independently selected from a C₁-C₁₂ alkyl group, a C₁-C₁₂ alkenyl group, and a C₁-C₁₂ alkoxy group;
R₁₂ and R₁₃ are independently selected from a C₁-C₁₂ alkyl group, and a -SiR₁₄R₁₅R₁₆ group, wherein R₁₄, R₁₅ and R₁₆ are independently selected from a C₁-C₁₂ alkyl group, a C₁-C₁₂ alkenyl group, and a C₁-C₁₂ alkoxy group, or wherein R₁₂ and the nitrogen atom to which it is bonded represent a branched or unbranched C₃-C₁₂ secondary imino group and R₁₃ is not present.

Preferably wherein:
A is a C₁-C₁₂ alkylene group;
R₁₀ and R₁₁ are independently selected from a C₁-C₁₂ alkyl group, and a C₁-C₁₂ alkoxy group;
R₁₂ and R₁₃ are
a -SiR₁₄R₁₅R₁₆ group, wherein R₁₄, R₁₅ and R₁₆ are independently selected from a C₁-C₁₂ alkyl group, a C₁-C₁₂ alkenyl group, and a C₁-C₁₂ alkoxy group, or wherein R₁₂ and the nitrogen atom to which it is bonded represent a branched or unbranched C₃-C₁₂ secondary imino group and R₁₃ is not present.

More preferably wherein:
A is a C₂-C₄ alkylene group;
R₁₀ is a C₁-C₄ alkoxy group and R₁₁ is a C₁-C₄ alkyl group or a C₁-C₄ alkoxy group, and;
R₁₂ and R₁₃ are each a -SiR₁₄R₁₅R₁₆ group, wherein R₁₄, R₁₅ and R₁₆ are each independently a C₁-C₄ alkyl group, or wherein R₁₂ and the nitrogen atom to which it is bonded represent a branched C₃-C₆ secondary imino group and R₁₃ is not present.

Still more preferably wherein:
A is a C₂-C₄ alkylene group;
R₁₀ is a C₁-C₄ alkoxy group and R₁₁ is a C₁-C₄ alkyl group or a C₁-C₄ alkoxy group, and;
R₁₂ and R₁₃ are each a -SiR₁₄R₁₅R₁₆ group, wherein R₁₄, R₁₅ and R₁₆ are a C₁-C₃ alkyl group, or wherein R₁₂ and the nitrogen atom to which it is bonded represent a branched C₆ secondary imino group and R₁₃ is not present.

The synthesis of sSBR copolymers terminated with carboxyl groups and the compounds of Formulae (I) to (V) above is discussed in detail in, for example, International patent application number WO 2014/173706 A1.

Preferred functional groups are carboxyl groups and/or silicon-containing groups.

The SBR copolymer may for example have mean molar masses (number-average, Mn) of 10,000 to 2,000,000 g/mol, preferably 100,000 to 1,000,000 g/mol.

The SBR copolymer may for example have a Mooney viscosity [ML 1+4 (100° C)] of 10 to 200 Mooney units, for example 30 to 150 Mooney units, 40 to 90 Mooney units, 50 to 60 Mooney units, for example 50, 51, 52, 53, 54, 55, 56, 57, 58, 59, 60 Mooney units.

The SBR copolymer may optionally be extended with an extender oil. For example, the extended SBR copolymer may comprise from 1 to 30 phr extender oil, preferably from 1 to 10 phr. The extender oil may be one or more selected from the group consisting of DAE (Distillate Aromatic Extract), Tdae (Treated Distillate Aromatic Extract), MES (Mild extraction solvate), RAE (Residual Aromatic Extract), TRAE (Treated Residual Aromatic Extract), naphthenic oil, heavy naphthenic oils, paraffin oils, vegetable oils such as coconut oil, synthetic oils such as alkylbenzene oils and castor oils. Preferably, the SBR copolymer is extended with an aromatic oil, such as Treated Distillate Aromatic Extract oil (TDAE) such that the extended SBR copolymer comprises from 2.5 to 7.5 phr Treated Distillate Aromatic Extract oil.

It is preferred that at least one of the first and second elastomers is a natural rubber. It is particularly preferred that the first elastomer is a natural rubber, which is preferably a polyisoprene rubber.

The first elastomer has a T_{g} of from -90 °C to -30 °C. Preferably, the first elastomer has a T_{g} of from -90 °C to - 40 °C, more preferably from -80 °C to -50 °C, still more preferably from about -75 °C to about -55 °C, e.g. about -60 °C or about -72 °C. The first elastomer may preferably have a T_{g} of from -85 to -60 °C, more preferably from -80 to -65 °C, still more preferably from -75 to -70°C.

The second elastomer has a T_{g} of from -50 °C to -10°C. Preferably, the second elastomer has a T_{g} of from -45 °C to -10 °C, more preferably from -40 °C to -15 °C, still more preferably from about -35 °C to about -18 °C. The second elastomer may preferably have a glass transition temperature which is between -30 to -10 °C, more preferably between -25 °C to -15 °C e.g. about -20 °C. Alternatively, the second elastomer may preferably have a glass transition temperature which is between -45 to - 25 °C, more preferably between -40 °C to -30 °C, still more preferably between -35 °C to -30 °C, e.g. about -33 °C.

It is preferred that the first elastomer has a T_{g} different from the T_{g} of the second elastomer. It is particularly preferred that the first elastomer has a T_{g} lower (e.g. more negative) than the T_{g} of the second elastomer. In such a case, the first elastomer can be considered a first, lower T_{g} elastomer, and the second elastomer can be considered a second, higher T_{g} elastomer. Preferably, the first elastomer has a T_{g} at least 10 °C lower than the T_{g} of the second elastomer, more preferably at least 20 °C lower, still more preferably at least 30 °C lower, still more preferably about 40 °C lower. Preferably, the first elastomer has a T_{g} between 10 to 65 °C lower than the T_{g} of the second elastomer, more preferably between 15 to 55 °C lower, still more preferably between 20 to 50 °C lower, still more preferably between 30 to 40 °C lower.

In the present invention, glass transition temperatures (T_{g}) are preferably measured by DSC (Differential Scanning Calorimetry), preferably according to standard ASTM D 7426-08 (for polymers) and ASTM D6604 (for resins).

The ratio of first elastomer to the second elastomer on a phr basis is preferably between 5:95 to 95:5, more preferably 10:90 to 90:10, still more preferably 20:80 to 80:20, still more preferably 25:75 to 75:25. Alternatively, the ratio of the second elastomer to the first elastomer on a phr basis is preferably between 5:95 to 95:5, more preferably 10:90 to 75:25, still more preferably 15:85 to 50:50, still more preferably 20:80 to 40:60, e.g. about 30:70. Alternatively, the ratio of the first elastomer to the second elastomer on a phr basis is preferably between 5:95 to 95:5, more preferably 10:90 to 75:25, still more preferably 10:90 to 50:50, still more preferably 15:85 to 40:60, still more preferably 15:85 to 30:70 e.g. about 20:80 or about 25:75.

The first elastomer is preferably present in the composition in an amount of from 5 to 95 phr, more preferably 10 to 90 phr, still more preferably 20 to 80 phr. Alternatively, the first elastomer is preferably present in the composition in an amount of from 5 to 95 phr, more preferably 10 to 75 phr, still more preferably 15 to 50 phr, still more preferably 15 to 30 phr, e.g. about 20 phr. Alternatively, the first elastomer is preferably present in the composition in an amount of from 95 to 5 phr, more preferably 90 to 25 phr, still more preferably 85 to 50 phr, still more preferably 80 to 60 phr, e.g. about 70 phr.

The second elastomer is preferably present in the composition in an amount of from 5 to 95 phr, more preferably 10 to 90 phr, still more preferably 20 to 80 phr, still more preferably 25 to 75 phr. Alternatively, the second elastomer is preferably present in the composition in an amount of from 95 to 5 phr, more preferably 90 to 25 phr, still more preferably 85 to 40 phr, still more preferably 80 to 45 phr, still more preferably about 70 to 50 phr, e.g. about 60 phr. Alternatively, the second elastomer is preferably present in the composition in an amount of from 95 to 5 phr, more preferably 95 to 25 phr, still more preferably 90 to 50 phr, still more preferably 85 to 60 phr, still more preferably about 85 to 70 phr, e.g. about 80 phr. Alternatively, the second elastomer is preferably present in the composition in an amount of from 5 to 95 phr, more preferably 10 to 75 phr, still more preferably 15 to 50 phr, still more preferably 20 to 40 phr, e.g. about 30 phr.

The composition may optionally comprise one or more further elastomers in addition to the first and second elastomers. For example, the composition may preferably comprise a first elastomer as hereinbefore described, a second elastomer as hereinbefore described, and a third elastomer.

A third elastomer preferably is a copolymer of styrene and butadiene and/or - preferably and - has a glass transition temperature (T_{g}) of from -50°C to -10°C. The third elastomer preferably has a glass transition temperature (T_{g}) of from -50°C to - 10°C, more preferably -45 °C to -10 °C, still more preferably from -40 °C to -15 °C, still more preferably from about -35 °C to about -18 °C. The third elastomer may preferably have a glass transition temperature which is between -30 to -10 °C, more preferably between -25 °C to -15 °C e.g. about -20 °C. A third elastomer preferably has a glass transition temperature (T_{g}) which is within 30 °C, more preferably 20 °C, still more preferably 10 °C, still more preferably 5 °C, still more preferably 2 °C of the glass transition temperature of the second elastomer. For example, the glass transition temperature of a third elastomer may be substantially the same as the glass transition temperature of the second elastomer.

The ratio of a third elastomer to the first elastomer on a phr basis is preferably from 4:1 to 1:4, more preferably 3:1 to 1:3, still more preferably 2:1 to 1:2, still more preferably 1.5:1 to 1:1.5, still more preferably 1.25:1 to 1:1.25, e.g. about 1:1. Preferred ratios of a third elastomer to the second elastomer on a phr basis can be derived from the preferred ratios of the third to first and first to second elastomers, as hereinbefore described. A preferred ratio of the third elastomer to the second elastomer on a phr basis is between 5:95 to 95:5, more preferably 10:90 to 75:25, still more preferably 10:90 to 50:50, still more preferably 15:85 to 40:60, still more preferably 15:85 to 30:70, e.g. about 20:80 or about 25:75.

The third elastomer is preferably present in the composition in an amount of from 5 to 95 phr, more preferably 10 to 75 phr, still more preferably 15 to 50 phr, still more preferably 15 to 30 phr, e.g. about 20 phr.

Preferably, the first elastomer is present in an amount of from 10 to 30 phr, the second elastomer is present in an amount of from 40 to 80 phr, and a third elastomer is present in an amount of from 10 to 30 phr. More preferably, the first elastomer is present in an amount of from 15 to 25 phr, the second elastomer is present in an amount of from 50 to 70 phr, and a third elastomer is present in an amount of from 15 to 25 phr.

In a preferred embodiment, the composition comprises:
a first elastomer being a natural rubber, optionally functionalised;
a second elastomer being a copolymer of styrene and butadiene, optionally functionalised, having a glass transition temperature (T_{g}) of from -50°C to -10°C; and
a third elastomer being a copolymer of styrene and butadiene, optionally functionalised, having a glass transition temperature (T_{g}) of from -50°C to -10°C.

In such a case, preferably the first elastomer is present in an amount of from 10 to 30 phr, the second elastomer is present in an amount of from 40 to 80 phr, and the third elastomer is present in an amount of from 10 to 30 phr. More preferably, the first elastomer is present in an amount of from 15 to 25 phr, the second elastomer is present in an amount of from 50 to 70 phr, and the third elastomer is present in an amount of from 15 to 25 phr.

### Resin System

As used herein, the term "resin system" refers collectively to all resins present in the composition.

Resins are compounds that are solid or highly viscous at standard ambient temperature and pressure (25°C, 10⁵ Pa). Hydrocarbon resins are essentially based on carbon and hydrogen but may comprise other atoms. They can be aliphatic, cycloaliphatic, aromatic, hydrogenated aromatic, and aliphatic/aromatic, i.e. based on aliphatic and/or aromatic monomers. Hydrocarbon resins can also be qualified as thermoplastic resins in the sense that they soften on heating and can thus be moulded.

The resin system of the present invention comprises a first hydrocarbon resin and a second hydrocarbon resin. In the present invention, it will be understood that the first hydrocarbon resin and the second hydrocarbon resin are different. They may differ by any structural feature and/or measurable property. For example, the hydrocarbon resins may be from different classes of resin, e.g. terpenic and rosinic. Additionally or alternatively, they may differ in properties such as glass transition temperature, softening point, aromaticity and/or polarity.

The present inventors have found that the wear performance offered by a rubber composition can be improved by providing a resin system comprising first and second hydrocarbon resins in an optimised ratio. Meanwhile, desirable levels of dynamical properties can also be maintained. Accordingly, rubber compositions of the present invention exhibit a highly desirable balance of properties, which makes them highly suited for pneumatic tyres.

It is preferred that:
the first hydrocarbon resin has a T_{g} of at least 50°C; and/or
the second hydrocarbon resin has a T_{g} of at least 20°C
   and/or
the first hydrocarbon resin is a terpenic resin; and/or
the second hydrocarbon resin is a rosinic resin
   and/or
the second hydrocarbon resin comprises a heteroatomic functional group; and/or
the first hydrocarbon resin does not comprise a heteroatomic functional group.

It is more preferred that:
the first hydrocarbon resin has a T_{g} of at least 50°C; and
the second hydrocarbon resin has a T_{g} of at least 20°C
   and/or
the first hydrocarbon resin is a terpenic resin; and
the second hydrocarbon resin is a rosinic resin
   and/or
the second hydrocarbon resin comprises a heteroatomic functional group; and
the first hydrocarbon resin does not comprise a heteroatomic functional group.

Examples of hydrocarbon resins that can be used in the present invention include those selected from the group consisting of cyclopentadiene homopolymer or copolymer resins (abbreviated as CPD), dicyclopentadiene homopolymer or copolymer resins (abbreviated as DCPD), terpene homopolymer or copolymer resins, rosinic resins, C₅ homopolymer or copolymer resins which may be partially or fully hydrogenated, C₉ homopolymer or copolymer resins which may be partially or fully hydrogenated, alpha-methyl-styrene homopolymer or copolymer resins and combinations thereof.

It is preferred that the first hydrocarbon resin is a terpenic resin. Terpenic resins include resins that are a mixture of terpene monomers (referred to herein as a heteropolymer), or a terpene homopolymer, wherein the terpene homopolymer may be an α-pinene homopolymer. They may be, for example an oligoterpene resin (i.e., a resin prepared from a terpene as the sole monomer), a terpene hydrocarbon resin (i.e., a resin prepared from a terpene and non-terpene hydrocarbon monomer(s)), and/or a terpene phenolic resin (i.e., a resin prepared from a terpene and phenolic compound). The basic molecular formula of terpenes are multiples of (C₅H₈)ₙ where n is the number of linked isoprene units and is greater than 1. Examples of terpenes suitable for use in the terpenic resin include, without limitation, isoprene, limonene, terpene, α-pinene, β-pinene, δ-3 carene, β-phellandrene and pyrolysates of α-pinene, β-pinene, δ-3 carene, δ-2 carene, turpentine, and combinations thereof. For example terpenic resin may comprise α-pinene or a mixture of α-pinene and β-pinene monomers. The terpenic resin may be substantially free of limonene, wherein the amount of limonene is less than 10 wt%, preferably less than 5 wt% and more preferably less than 1 wt% based upon the total amount of the terpenic resin. In preferred embodiments, the terpenic resin comprises a mixture of α-pinene and β-pinene monomers wherein limonene is present in an amount of less than 10 wt%. Suitable terpenic resins include Kraton Sylvatraxx 8115.

The softening point of the terpenic resin may preferably be at least 70°C, preferably from 70°C to 160°C, more preferably from 100°C to 130°C, for example 100°C, 105°C, 110°C, 115°C, 120°C, 125°C, or 130°C. The softening point of a material is the temperature at which is softens beyond a certain softness, which is measured using a ring and ball apparatus according to ISO 4625.

The aromaticity of the terpenic resin as measured by ¹H NMR may preferably be greater than 0, preferably from 0.1 to 5, preferably 1. Aromaticity values defined herein are measured by ¹H NMR as the percentage content of aromatic protons having a chemical shift from 6.5 to 8.5 ppm.

The second hydrocarbon resin preferably comprises a heteroatomic functional group, which is preferably a heteroatomic functional group selected from the group consisting of alcohol, carboxyl, ester, amide, amine, thiol, and sulfonic acid. Preferably the heteroatomic functional group is a carboxyl group. Accordingly, the hydrocarbon resin comprising a heteroatomic functional group may be a hydrocarbon resin comprising a carboxyl group. In a particularly preferred embodiment, the hydrocarbon resin comprising a carboxyl group is a rosinic resin. It is preferred that the first hydrocarbon resin does not comprise a heteroatomic functional group.

It is preferred that the second hydrocarbon resin is a rosinic resin. Rosinic resins include resins that are mixtures of isomer organic acids (e.g. resin acid or rosin acids), characterised by a common structure comprising three C₆ fused rings, double bonds and a single carboxylic group. Rosin is a solid resinous material that occurs naturally in pine trees. There are three major sources of rosin, (1) gum rosin from the oleoresin extrudate of the living pine tree, (2) wood rosin from the oleoresin contained in the aged stumps; and (3) tall oil rosin from the waste carboxyl group to the liquor recovered as a by-product in the Kraft paper industry. The primary component of rosin is typically abietic acid. Rosinic resins include rosin ester resins, which may be an ester of rosin and a polyhydric alcohol. The polyhydric alcohol can be selected from the group consisting of ethylene glycol, propylene glycol, diethylene glycol, triethylene glycol, tetraethylene glycol, trimethylene glycol, pentaerythritol, dipentaerythritol, tripentaerythritol, trimethylolethane, trimethylolpropane, mannitol, sorbitol, and mixtures thereof. Any rosinic resin that fulfils the glass transition temperature requirement can suitably be used in the present invention. Suitable rosinic resins include the Kraton Sylvatraxx 2097.

The softening point of the rosinic resin may be greater than 50°C, preferably from 70°C to 130°C, more preferably from 90°C to 110°C, for example 90°C, 95°C, 100°C, or 110°C or any intermediate value. The softening point of a material is the temperature at which is softens beyond a certain softness, which is measured using a ring and ball apparatus according to ISO 4625.

The aromaticity of the rosinic resin as measured by ¹H NMR may be greater than 1, preferably from 3.5 to 9.5, preferably 6.5. Aromaticity values defined herein are measured by ¹H NMR as the percentage content of aromatic protons having a chemical shift from 6.5 to 8.5 ppm.

The ratio of the amount of the first hydrocarbon resin to the amount of the second hydrocarbon resin on a parts per hundred rubber (phr) basis is between 10:90 to 90:10. Preferably, the ratio of the amount of the first hydrocarbon resin to the amount of the second hydrocarbon resin on a parts per hundred rubber (phr) basis is between 85:15 to 15:85, preferably 80:20 to 20:80, more preferably 75:25 to 25:75, still more preferably 65:35 to 35:65, still more preferably 55:45 to 45:55, e.g. about 50:50. Alternatively, the ratio of the amount of the first hydrocarbon resin to the amount of the second hydrocarbon resin on a parts per hundred rubber (phr) basis is preferably between 90:10 to 20:80, preferably 85:15 to 30:70, more preferably 85:15 to 40:60, still more preferably 85:15 to 50:50, still more preferably 80:20 to 65:35, still more preferably 80:20 to 70:30, e.g. about 75:25.

The first hydrocarbon resin preferably has a T_{g} of at least 50 °C, more preferably at least 55 °C, still more preferably at least 60 °C, e.g. about 65 °C or greater. The first hydrocarbon resin preferably has a T_{g} of between 50 to 90 °C, more preferably 55 to 80 °C, still more preferably 60 to 70 °C, e.g. about 66 °C.

The second hydrocarbon resin preferably has a T_{g} of at least 20°C, preferably at least 30 °C, more preferably at least 40 °C, still more preferably at least 45 °C. The second hydrocarbon resin preferably has a T_{g} of less than 65 °C, preferably less than 60 °C, still more preferably less than 50 °C. The second hydrocarbon resin preferably has a T_{g} of between 20 to 65 °C, more preferably 30 to 60 °C, still more preferably 40 to 55 °C, still more preferably 45 to 50 °C, e.g. about 49 °C.

The first hydrocarbon resin preferably has a glass transition temperature that is different to the glass transition temperature of the second hydrocarbon resin, more preferably a glass transition temperature that is higher than the glass transition temperature of the second hydrocarbon resin. The first hydrocarbon resin may preferably have a glass transition temperature that is at least 5 °C higher, more preferably at least 10 °C higher, still more preferably at least 15 °C higher than the glass transition temperature of the second hydrocarbon resin. The first hydrocarbon resin may preferably have a glass transition temperature that is from 5 to 40 °C higher than the second hydrocarbon resin, more preferably from 10°C to 30 °C higher, still more preferably 10 to 20 °C higher, e.g. about 17 °C higher, than the second hydrocarbon resin. The glass transition temperature of a material is the temperature (or range of temperatures) over which the material transitions from a hard and relatively brittle "glassy" state into a viscous or rubbery state as the temperature is increased. It is measured by DSC (Differential Scanning Calorimetry).

The first hydrocarbon resin may preferably have a different, preferably lower, aromaticity than the second hydrocarbon resin. Aromaticity values defined herein are measured by ¹H NMR as the percentage content of aromatic protons having a chemical shift from 6.5 to 8.5 ppm. For example, the aromaticity of the first hydrocarbon resin may be from 1% to 10% lower than that of the second hydrocarbon resin, preferably from 3% to 7% lower, for example 5.5% or 4.5% lower than that of the second hydrocarbon resin. In this regard, the first hydrocarbon resin may have an aromaticity of less than 4%, preferably from 0% to 3%. The second hydrocarbon resin may have and aromaticity of at least 4%, preferably from 5% to 15%, more preferably from 5.5% to 7.5%.

The resin system of the present invention may comprise further additional resins, in addition to the first and second resins. Alternatively, the resin system may consist, or consists essentially, of the first and second resins.

The resin system may comprise a C₅ resin. If a C₅ resin is used as a first and/or second hydrocarbon resin, it is preferably used as the first hydrocarbon resin. C₅ resins are preferably partially hydrogenated C₅ resin. As used herein, the term "Cs resin" refers to a resin obtained by polymerisation of a cracked naphtha feed that contains C₅ monomers. C₅ monomers include olefins, linear conjugated diolefins and cyclic conjugated diolefins. Other monomers may additionally be present in the feed and these include, but are not limited to, dicyclopentadiene (DCPD).

In one embodiment, the Cs resin for use in the invention may be obtained by copolymerisation of C₅ monomers and dicyclopentadiene (DCPD) monomers. Where any DCPD monomers are present, these will generally be provided in low amounts. For example, the content of DCPD in the feed used to produce the resin may be less than about 5 wt.%, e.g. less than about 2 wt.%. Preferably, the C₅ resin may comprise monomer units derived from C₅ monomers and from DCPD. As such the partially hydrogenated C₅ resin may comprise a partially hydrogenated C₅ and dicyclopentadiene (DCPD) copolymer, preferably wherein DCPD is present in an amount of less than 5 wt% of the C₅ and DCPD monomers. However, in another embodiment, the feed used to provide the C₅ resin may exclude any DCPD monomer. This monomer can be removed from the feed stream by methods generally known in the art. In one embodiment, the C₅ resin may therefore consist essentially of monomer units derived from C₅ monomers.

As used herein, the term "partially hydrogenated" means that the resin component contains less than 100% olefinic protons, which may be determined by¹H NMR spectroscopy. Partially hydrogenated resins are well known in the art and may have different degrees of hydrogenation. In some embodiments, the partially hydrogenated resin may contain less than 95% olefinic protons, more preferably less than 90% olefinic protons. In some embodiments, it may contain less than 75% olefinic protons, for example less than 50% olefinic protons. In some embodiments, the partially hydrogenated resin may contain less than 40% olefinic protons, less than 25% olefinic protons, less than 15% olefinic protons, or less than 10% olefinic protons. For example, it may contain less than 9%, less than 8%, less than 7%, or less than 6% olefinic protons. In one embodiment, the partially hydrogenated resin may contain about 5% or more olefinic protons. For example, it may contain from 5% to 90% olefinic protons. In one embodiment, the partially hydrogenated resin may contain about 5% olefinic protons, i.e. it will be about 95% hydrogenated. Suitable partially hydrogenated C₅ resins include Eastman Impera E1780.

The softening point of the partially hydrogenated C₅ resin may preferably be at least 70°C, preferably from 70°C to 160°C, more preferably from 110°C to 150°C, for example 110°C, 115°C, 120°C, 125°C, 130°C, 135°C, 140°C, 145°C, or 150°C. Preferably, the C₃ resin has a T_{g} of from 0 to 90 °C, more preferably from 20 to 90 °C, still more preferably from 50 to 80 °C, yet more preferably from 60 to 80 °C, e.g. from 69 to 79 °C.

The aromaticity of the partially hydrogenated C₅ resin as measured by NMR may preferably be greater than 0, preferably from 0.1 to 5, preferably 2.

Preferably, the weight average molecular weight (Mw) of the C₅ resin is greater than 200 Da, more preferably greater than 400 Da, still more preferably greater than 600 Da. Preferably, the weight average molecular weight (Mw) of the C₅ resin is from 200 to 1200 Da, more preferably from 350 to 1000 Da, still more preferably from 500 to 900 Da, yet more preferably from 600 to 800 Da, e.g. from 650 to 750 Da.

The resin system may comprise a C₉ resin. If a C₉ resin is used as a first and/or second hydrocarbon resin, it is preferably used as the first hydrocarbon resin. The term "C₉ resin" refers to a C₉ synthetic petroleum resin and examples include a polymer obtained by polymerization using a Friedel-Crafts catalyst such as AlCl₃ or BF₃. Examples of the C₉ resin include a copolymer containing indene, styrene, α-methyl styrene, vinyl toluene, or the like as main components. The C₉ resin may preferably be at least partially hydrogenated.

Preferably, the weight average molecular weight (Mw) of the C₉ resin is greater than 1500 Da, more preferably greater than 2000 Da, still more preferably greater than 2500 Da. Preferably, the weight average molecular weight (Mw) of the C₉ resin is from 1500 to 4000 Da, more preferably from 2000 to 3500 Da, still more preferably from 2500 to 3000 Da, yet more preferably from 2600-2800 Da.

Preferably, the glass transition temperature (T_{g}) of the C₉ resin is from 0 to 90 °C, more preferably from 20 to 70 °C, still more preferably from 40 to 55 °C, e.g. from 45 to 50 °C. Preferably, the C₉ resin has a softening point of 100°C or higher, more preferably from 110°C to 135°C.

Preferably, the resin system is present in the composition in an amount of greater than 15 phr, preferably greater than 25 phr, more preferably greater than 35, still more preferably greater than 45, most preferably about or greater than 50 phr. Preferably, the resin system is present in the composition in an amount of between 15 to 75 phr, more preferably 25 to 70 phr, still more preferably 35 to 60 phr, still more preferably 40 to 55 phr, e.g. about 50 phr.

Alternatively, preferably the resin system is present in the composition in an amount of greater than 5 phr, more preferably greater than 10 phr, still more preferably greater than 15 phr. Preferably, the resin system is present in the composition in an amount of between 5 to 40 phr, more preferably 10 to 30 phr, still more preferably 15 to 20 phr, e.g. about 16 or 17 phr.

Alternatively, preferably the resin system is present in the composition in an amount of 5 to 70 phr, more preferably 10 to 60 phr, still more preferably 12 to 55 phr.

### Additional components

In addition to the components described above, the rubber compositions may comprise additional components that the skilled person would include in order to prepare rubber compositions that are suitable for the preparation of pneumatic tyres. These include, for example, liquid plasticizers, vulcanising agents (such as sulphur), vulcanisation accelerators, vulcanisation accelerator auxiliaries, silane coupling agents, anti-degradation agents (such as antioxidants or anti-ozonants), waxes, fillers, and processing agents.

It is preferred that the composition further comprises one or more fillers. It is preferred that the filler is an inorganic reinforcing filler, which may include silica-based mineral fillers and/or aluminium-based mineral fillers. Preferably the silica-based filler is silica (SiOz). Additional silaceous fillers that are suitable include precipitated amorphous silica, wet silica (hydrated silicic acid), dry silica (anhydrous silicic acid), fumed silica, calcium silicate, aluminum silicate, magnesium silicate (e.g., Mg₂SiO₄, MgSiO₃), magnesium calcium silicate (CaMgSiO₄), aluminum calcium silicate (e.g., AₕO₃.CaO₂SiO₂).

Accordingly, the composition preferably comprises silica. Preferably, the silica has a CTAB surface area of between 120 to 220 m² g⁻¹, more preferably 140 to 200 m² g⁻¹, still more preferably 150 to 190 m² g⁻¹, still more preferably 160 to 180 m² g⁻¹, e.g about 167 m² g⁻¹. As used herein "CTAB" refers to the cetyltrimethylammonium bromide (CTAB) adsorption method, preferably measured by the CTAB method according to ASTM D6845.

The silica is preferably present in the composition in an amount of greater than 20 phr, preferably greater than 35 phr, more preferably greater than 50 phr, still more preferably greater than 70 phr, e.g. about or greater than 75 phr. Preferably, the silica is present in the composition in an amount of 20 to 120 phr, preferably 35 to 105 phr, more preferably 50 to 90 phr, still more preferably 60 to 85 phr, still more preferably 70 to 80 phr, e.g. about 75 phr.

The rubber composition may comprise additional fillers (i.e. fillers in addition to the inorganic reinforcing filler), such as carbon black. The composition preferably comprises carbon black. The carbon black may be furnace black, channel blacks, and lamp blacks. For example, the carbon black may be one or more selected from the group consisting of super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be used include acetylene blacks. The carbon black may be in pelletized form or an unpelletized flocculent mass. A specific example of the carbon black in the rubber compositions of the present invention is CORAX^{®} N234 by Orion Engineered Carbons. The amount of carbon black that the rubber compositions of the present invention comprises may preferably be from 0.1 to 20 phr, more preferably from 5 to 15 phr, still more preferably from 6 to 10 phr, e.g. about 8 phr.

### Method of preparation

In preparing the rubber composition of the present invention, the method for combining each of the components is not limited and any of the methods known to the person skilled in the art may be used. For example, all of the component materials may be blended and kneaded at once or they may be blended and kneaded in multiple steps. For blending and kneading, a kneader such as roll kneader, internal mixer, or Banbury mixer may be used. For moulding the rubber composition into sheet or strip shape, any known moulding machine such as extrusion moulding machine or press moulding machine may be used. The vulcanization conditions for hardening the above rubber composition are not limited and can be any of those known to the person skilled in the art. Typically, however, vulcanization conditions of treatment at 140 to 180° C for 5 to 120 minutes are employed.

### Pneumatic tyres

In a further aspect, the present invention is directed to pneumatic tyres. The pneumatic tyres are not particularly limited and may be any tyres used on passenger vehicles such as cars, motorbikes, and commercial goods vehicles, for example. The pneumatic tyres may be suited to any type of climate, weather or road conditions and may be, for example, a summer tyre, a winter tyre, a snow tyre, an all-season tyre, a sports tyre, or a high performance tyre.

In view of the above, the present invention is directed to a pneumatic tyre comprising the rubber composition of the present invention and/or a pneumatic tyre prepared from the rubber composition of the present invention.

In a further aspect, the present invention is directed to the use of the rubber composition in the manufacture of a pneumatic tyre.

The part of the tyre in which the rubber composition of the present invention is used is not specifically limited and may be appropriately selected depending on the intended purpose. For example, the rubber composition may be used in the tread, base treads, side walls, side-reinforcing rubbers, bead fillers, etc. Among these, the rubber composition is advantageously used in the tread component.

Regarding the method for producing the tyre, any method known to those skilled in the art can be used. For example, components generally used in tyre production, such as a carcass layer, a belt layer, a tread layer and the like formed of at least one selected from the group consisting of an unvulcanised rubber composition and a cord are layered in order on a drum for tyre formation and then the drum is removed to give a green tyre. Next, the green tyre is vulcanised under heat according to an ordinary method to produce a desired tyre.

### Preferred Embodiments

Some preferred rubber compositions according to the present invention are as follows.

A rubber composition for a pneumatic tyre, the composition comprising:
a first elastomer, optionally functionalised, having a glass transition temperature (T_{g}) of from -90°C to -30 °C;
a second elastomer, preferably a copolymer of styrene and butadiene, optionally functionalised, having a glass transition temperature (T_{g}) of from -50°C to - 10°C; and
a resin system comprising:
   a first hydrocarbon resin having a T_{g} of at least 50°C; and
   a second hydrocarbon resin having a T_{g} of at least 20°C,
   wherein
the ratio of the amount of the first hydrocarbon resin to the amount of the second hydrocarbon resin on a parts per hundred rubber (phr) basis is between 10:90 to 90:10; and
the first hydrocarbon resin has a glass transition temperature that is higher than the glass transition temperature of the second hydrocarbon resin, preferably at least 5 °C higher, more preferably at least 10 °C higher, still more preferably at least 15 °C higher than the glass transition temperature of the second hydrocarbon resin.

A rubber composition for a pneumatic tyre, the composition comprising:
a first elastomer, optionally functionalised, having a glass transition temperature (T_{g}) of from -90°C to -30 °C;
a second elastomer, preferably a copolymer of styrene and butadiene, optionally functionalised, having a glass transition temperature (T_{g}) of from -50°C to - 10°C; and
a resin system comprising:
   a first hydrocarbon resin, preferably not comprising a heteroatomic functional group, preferably wherein the first hydrocarbon resin is a terpenic resin; and
   a second hydrocarbon resin comprising a heteroatomic functional group, preferably a rosinic resin,
wherein the ratio of the amount of the first hydrocarbon resin to the amount of the second hydrocarbon resin on a parts per hundred rubber (phr) basis is between 10:90 to 90:10.

A rubber composition for a pneumatic tyre, the composition comprising:
a first elastomer, optionally functionalised, having a glass transition temperature (T_{g}) of from -90°C to -30 °C;
a second elastomer, preferably a copolymer of styrene and butadiene, optionally functionalised, having a glass transition temperature (T_{g}) of from -50°C to - 10°C;
optionally, a third elastomer, preferably being a copolymer of styrene and butadiene, optionally functionalised, and/or having a glass transition temperature (T_{g}) of from -50°C to -10°C; and
a resin system comprising:
   a first hydrocarbon resin having a T_{g} of at least 50°C; and
   a second hydrocarbon resin having a T_{g} of at least 20°C,
   wherein
the first hydrocarbon resin has a glass transition temperature that is higher than the glass transition temperature of the second hydrocarbon resin, preferably at least 5 °C higher, more preferably at least 10 °C higher, still more preferably at least 15 °C higher than the glass transition temperature of the second hydrocarbon resin
the first elastomer is a natural rubber;
the second elastomer is a copolymer of styrene and butadiene;
the ratio of the amount of the first hydrocarbon resin to the amount of the second hydrocarbon resin on a parts per hundred rubber (phr) basis is between 90:10 to 20:80, preferably 85:15 to 30:70, more preferably 85:15 to 40:60, still more preferably 85:15 to 50:50, still more preferably 80:20 to 65:35, still more preferably 80:20 to 70:30, e.g. about 75:25; and
preferably, the first elastomer has a T_{g} lower than the T_{g} of the second elastomer, preferably wherein the first elastomer has a T_{g} at least 10 °C lower than the T_{g} of the second elastomer, more preferably at least 20 °C lower, still more preferably at least 30 °C lower, still more preferably about 40 °C lower.

A rubber composition for a pneumatic tyre, the composition comprising:
a first elastomer, optionally functionalised, having a glass transition temperature (T_{g}) of from -90°C to -30 °C;
a second elastomer, preferably a copolymer of styrene and butadiene, optionally functionalised, having a glass transition temperature (T_{g}) of from -50°C to - 10°C; and
a resin system comprising:
   a first hydrocarbon resin having a T_{g} of at least 50°C; and
   a second hydrocarbon resin having a a T_{g} of at least 20°C,
   wherein
the first hydrocarbon resin has a glass transition temperature that is higher than the glass transition temperature of the second hydrocarbon resin, preferably at least 5 °C higher, more preferably at least 10 °C higher, still more preferably at least 15 °C higher than the glass transition temperature of the second hydrocarbon resin
the first elastomer is a copolymer of styrene and butadiene;
the second elastomer is a copolymer of styrene and butadiene;
the ratio of the amount of the first hydrocarbon resin to the amount of the second hydrocarbon resin on a parts per hundred rubber (phr) basis is between 85:15 to 15:85, preferably 80:20 to 20:80, more preferably 75:25 to 25:75, still more preferably 65:35 to 35:65, still more preferably 55:45 to 45:55, e.g. about 50:50; and
preferably, the first elastomer has a T_{g} lower than the T_{g} of the second elastomer, preferably wherein the first elastomer has a T_{g} at least 10 °C lower than the T_{g} of the second elastomer, more preferably at least 20 °C lower, still more preferably at least 30 °C lower, still more preferably about 40 °C lower.

A rubber composition for a pneumatic tyre, the composition comprising:
a first elastomer, optionally functionalised, having a glass transition temperature (T_{g}) of from -90°C to -30 °C;
a second elastomer, preferably a copolymer of styrene and butadiene, optionally functionalised, having a glass transition temperature (T_{g}) of from -50°C to - 10°C; and
a resin system comprising:
   a first hydrocarbon resin, preferably not comprising a heteroatomic functional group, preferably wherein the first hydrocarbon resin is a terpenic resin; and
   a second hydrocarbon resin comprising a heteroatomic functional group, preferably a rosinic resin,
   wherein
the first hydrocarbon resin has a glass transition temperature that is higher than the glass transition temperature of the second hydrocarbon resin, preferably at least 5 °C higher, more preferably at least 10 °C higher, still more preferably at least 15 °C higher than the glass transition temperature of the second hydrocarbon resin;
the first elastomer is a copolymer of styrene and butadiene;
the second elastomer is a copolymer of styrene and butadiene;
the ratio of the amount of the first hydrocarbon resin to the amount of the second hydrocarbon resin on a parts per hundred rubber (phr) basis is between 85:15 to 15:85, preferably 80:20 to 20:80, more preferably 75:25 to 25:75, still more preferably 65:35 to 35:65, still more preferably 55:45 to 45:55, e.g. about 50:50;
preferably, the first elastomer has a T_{g} lower than the T_{g} of the second elastomer, preferably wherein the first elastomer has a T_{g} at least 10 °C lower than the T_{g} of the second elastomer, more preferably at least 20 °C lower, still more preferably at least 30 °C lower, still more preferably about 40 °C lower.

A rubber composition for a pneumatic tyre, the composition comprising:
a first elastomer, optionally functionalised, having a glass transition temperature (T_{g}) of from -90°C to -30 °C;
a second elastomer, preferably a copolymer of styrene and butadiene, optionally functionalised, having a glass transition temperature (T_{g}) of from -50°C to - 10°C;
optionally, a third elastomer, preferably being a copolymer of styrene and butadiene, optionally functionalised, and/or having a glass transition temperature (T_{g}) of from -50°C to -10°C; and
a resin system comprising:
   a first hydrocarbon resin, preferably not comprising a heteroatomic functional group, preferably wherein the first hydrocarbon resin is a terpenic resin; and
   a second hydrocarbon resin comprising a heteroatomic functional group, preferably a rosinic resin,
   wherein
the first hydrocarbon resin has a glass transition temperature that is higher than the glass transition temperature of the second hydrocarbon resin, preferably at least 5 °C higher, more preferably at least 10 °C higher, still more preferably at least 15 °C higher than the glass transition temperature of the second hydrocarbon resin;
the first elastomer is a natural rubber;
the second elastomer is a copolymer of styrene and butadiene;
the ratio of the amount of the first hydrocarbon resin to the amount of the second hydrocarbon resin on a parts per hundred rubber (phr) basis is between 90:10 to 20:80, preferably 85:15 to 30:70, more preferably 85:15 to 40:60, still more preferably 85:15 to 50:50, still more preferably 80:20 to 65:35, still more preferably 80:20 to 70:30, e.g. about 75:25; and
preferably, the first elastomer has a T_{g} lower than the T_{g} of the second elastomer, preferably wherein the first elastomer has a T_{g} at least 10 °C lower than the T_{g} of the second elastomer, more preferably at least 20 °C lower, still more preferably at least 30 °C lower, still more preferably about 40 °C lower.

### EXAMPLES

The present invention will now be described by the following non-limiting examples.

### Measurement methods

### Loss Factor (tan δ)

The loss factor (tangent δ, or tan δ) at different temperatures is used to evaluate rolling resistance and wet traction. Dynamic physical testing to determine tan δ at 60 °C was conducted in accordance with the ISO 4664 standard.

### Wear Life Estimation

Wear Life Estimation was determined using Tire Tread Wear Simulation Systems, using machinery from MTS^{®} Systems or ZF^{®} Friedrichshafen AG.

### Wear Energy and Wt Loss

Wear Energy and Wt Loss tests were conducted in accordance with ISO 4649, and are used to evaluate wear performance.

### General method

Tyre compounds were prepared according to the following general method. The following components were compounded in the amounts recited in Table 1 below together with other additives including suitable cross-linking agents and accelerators. The values in Table 1 are all expressed in phr.

### Components

All components were obtained commercially, unless specified otherwise.

### Elastomers:

| **Label** | **Description** |
|---|---|
| SBR-A | sSBR High Tg (Tg = -33°C), 35% Styrene, 26% Vinyl, Fxt Aminosilane according to Formula (X), dry |
| SBR-B | sSBR Low Tg (Tg = -60°C), 9% Styrene, 33% Vinyl, 5phr oil (TDAE), Fxt COO- according to Formula (I) |
| SBR-C | sSBR High Tg (Tg = -20°C), 21% Styrene, 60% Vinyl, 5phr oil (TDAE), Fxt COO- according to Formula (I) |
| SBR-D | sSBR High Tg (Tg = -20°C), 35% Styrene, 58% Vinyl, 24.2phr oil (TDAE), Coupled Si |
| NR | Natural Rubber |

### Additives:

STD Silica CTAB = 167; NSA = 180, spec. gravity = 1.95

Carbon black (Corax^{®} N234)

### Hydrocarbon resins:

Terpenic resin having a T_{g} of 66°C, an aromaticity of 1 and a polarity of 0 (Kraton Silvatraxx 8115)

Rosinic resin having a T_{g} of 49°C, an aromaticity of 6.5 and a polarity of 15 (Kraton Silvatraxx 2097)

**Table 1**

| **Composition** | **CE1** | **Ex. 1** | **CE2** | **CE3** | **Ex. 2** | **Ex. 3** | **Ex. 4** |
|---|---|---|---|---|---|---|---|
| SBR-A | 30 | 30 | - | - | - | - | - |
| SBR-B | 70 | 70 | - | - | - | - | - |
| SBR-C | - | - | 60 | 60 | 60 | 60 | 60 |
| SBR-D | - | - | 20 | 20 | 20 | 20 | 20 |
| NR | - | - | 20 | 20 | 20 | 20 | 20 |
| Silica | 80 | 80 | 80 | 80 | 80 | 80 | 80 |
| Carbon Black | 8 | 8 | 8 | 8 | 8 | 8 | 8 |
| Rosinic resin | 0 | 25 | 0 | 16.8 | 8.4 | 12.6 | 4.2 |
| Terpenic resin | 50 | 25 | 16.8 | 0 | 8.4 | 4.2 | 12.6 |
| Ratio of terpenic resin : rosin resin | 100:0 | 50:50 | 100:0 | 0:100 | 50:50 | 25:75 | 75:25 |

### Dynamical properties from slab

The examples and comparative examples were subjected to slab testing to determine various dynamical properties, as tabulated in Tables 2 and 3. Table 2 gives absolute values for Tanδ. Table 3 gives relative rolling resistance, determined using Tanδ 60 °C.

**Table 2**

| | **CE1** | **Ex. 1** |
|---|---|---|
| Tanδ 60°C | 0.184 | 0.182 |

**Table 3**

| | **CE2** | **CE3** | **Ex. 2** | **Ex. 3** | **Ex. 4** |
|---|---|---|---|---|---|
| Tanδ 60°C | 0.167 | 0.183 | 0.168 | 0.180 | 0.190 |
| Rolling Resistance by Tanδ 60°C | 100 | 98 | 100 | 98 | 97 |

The results of Tables 2 and 3 show that the comparative examples and the examples of the present invention do not differ significantly in dynamical properties. All of the values recorded are in desirable ranges, making the compositions suitable for use in tyres.

### Wear Estimation by Tire Tread Wear Simulation System

The examples and comparative examples were subjected to further testing to assess wear performance.

Table 4 shows the wear life estimation for CE1 and Ex. 1.

**Table 4**

| | **CE1** | **Ex. 1** |
|---|---|---|
| Wear Life Estimation (%) | 100 | 125 |

The results of Table 4 show that Ex. 1, having a blend of first and second hydrocarbon resins, has improved wear performance over CE1, having just a single hydrocarbon resin.

Figure 1 illustrates the wear energy and wt loss performance of CE2-3 and Ex. 2-4, as tabulated in table 5. To maximise wear performance, there is desire to achieve a low wear energy in combination with a low wt loss.

**Table 5**

| | **CE2** | **Ex. 2** | **Ex. 3** | **Ex. 4** | **CE3** |
|---|---|---|---|---|---|
| Wt loss (normalised) | 110 | 110 | 107 | 105 | 106 |
| Wear Energy | 2480 | 2456 | 2490 | 2344 | 2525 |

It can be seen that the examples of the present invention, having first and second hydrocarbon resins, better achieve the desired balance of low wear energy and low wt loss. This is indicative of an improved wear performance. In contrast, each of the two comparative examples, comprising only one hydrocarbon resin, exhibits the highest recorded value for at least one of the two properties, thus achieving an inferior balance of properties and an inferior wear performance.

### Summary

The examples of the present invention, comprising first and second hydrocarbon resins, have been shown to offer improvements in wear performance, as compared with comparative examples comprising just one hydrocarbon resin. This effect has been demonstrated in conjunction with different elastomer systems. At the same time, the examples of the present invention maintain desirable levels of dynamical properties, as compared with the comparative examples.

## Claims

1. A rubber composition for a pneumatic tyre, the composition comprising:
a first elastomer, optionally functionalised, having a glass transition temperature (T_{g}) of from -90°C to -30 °C;
a second elastomer having a glass transition temperature (T_{g}) of from -50°C to -10°C, preferably wherein the second elastomer is a copolymer of styrene and butadiene, optionally functionalised; and
a resin system comprising:
a first hydrocarbon resin; and
a second hydrocarbon resin,
wherein the ratio of the amount of the first hydrocarbon resin to the amount of the second hydrocarbon resin on a parts per hundred rubber (phr) basis is between 10:90 to 90:10.

2. A rubber composition according to claim 1, wherein:
the first hydrocarbon resin has a T_{g} of at least 50°C; and,
the second hydrocarbon resin has a T_{g} of at least 20°C.

3. A rubber composition according to any preceding claim, wherein the second hydrocarbon resin comprises a heteroatomic functional group, preferably wherein the first hydrocarbon resin does not comprise a heteroatomic functional group.

4. A rubber composition according to claim 4, wherein the heteroatomic group is selected from alcohol, carboxyl, ester, amide, amine, thiol, and sulfonic acid, preferably a carboxyl group.

5. A rubber composition according to any preceding claim, wherein the first hydrocarbon resin does not comprise a heteroatomic functional group.

6. A rubber composition according to any preceding claim, wherein:
the first hydrocarbon resin is a terpenic resin; and
the second hydrocarbon resin is a rosinic resin.

7. A rubber composition according to any preceding claim, wherein:
the first elastomer is a natural rubber; and
the second elastomer is a copolymer of styrene and butadiene.

8. A rubber composition according to any preceding claim, wherein:
the first elastomer is a copolymer of styrene and butadiene; and
the second elastomer is a copolymer of styrene and butadiene.

9. A rubber composition according to any preceding claim, wherein the first elastomer has a T_{g} which is different to, preferably lower than, the T_{g} of the second elastomer.

10. A rubber composition according to any preceding claim, wherein the ratio of the amount of the first hydrocarbon resin to the amount of the second hydrocarbon resin on a parts per hundred rubber (phr) basis is between 85:15 to 15:85, preferably 80:20 to 20:80, more preferably 75:25 to 25:75, still more preferably 65:35 to 35:65, still more preferably 55:45 to 45:55, e.g. about 50:50.

11. A rubber composition according to any preceding claim, wherein the ratio of the amount of the first hydrocarbon resin to the amount of the second hydrocarbon resin on a parts per hundred rubber (phr) basis is between 90:10 to 20:80, preferably 85:15 to 30:70, more preferably 85:15 to 40:60, still more preferably 85:15 to 50:50, still more preferably 80:20 to 65:35, still more preferably 80:20 to 70:30, e.g. about 75:25.

12. A rubber composition according to any preceding claim, wherein the first and second hydrocarbon resins have different glass transition temperatures, preferably wherein the first hydrocarbon resin has a higher glass transition temperature than the glass transition temperature of the second hydrocarbon resin.

13. A rubber composition according to any preceding claim, wherein the composition further comprises a silica.

14. Use of the rubber composition according to any of claims 1 to 13 in the manufacture of a pneumatic tyre.

15. A pneumatic tyre comprising or prepared from the rubber composition according to any one of claims 1 to 13.
